# EUROPEAN PATENT APPLICATION

(11) **EP 4 648 401 A1**
(43) Date of publication of application: **12.11.2025**
(21) Application number: 23917161.4
(22) Date of filing: 09.11.2023
(51) Int. Cl.: H04N 7/15

(54) **VIDEO STREAM DISPLAY METHOD AND APPARATUS, AND DEVICE, SYSTEM AND STORAGE MEDIUM**

(30) Priority: 16.01.2023 CN 202310063999
(71) Applicant: Huawei Cloud Computing Technologies Co., Ltd., Guiyang, Guizhou 550025 (CN)
(72) Inventor: WANG, Lijie, Guiyang, Guizhou 550025 (CN)
(74) Representative: Gill Jennings & Every LLP
(86) International application number: PCT/CN2023/130717
(87) International publication number: WO 2024/152693

(57) **Abstract**

This application discloses a video stream display method and apparatus, a device, a system, and a storage medium, and relates to the field of communication technologies. For example, a first device performs the method. The first device receives a video stream of a video conference sent by a second device. The first device displays the video stream on a first interface of the video conference. The first device obtains a to-be-played-back video frame corresponding to the video stream, and displays the to-be-played-back video frame on a second interface of the video conference. The to-be-played-back video frame is a video frame with a playback probability greater than a probability threshold in the video stream. The method enables a viewer to play back previous content at any time during the video conference without affecting progress of the video conference, thereby improving display effect of the video stream of the video conference.

## Description

This application claims priority to Chinese Patent Application No. 202310063999.3, filed on January 16, 2023 and entitled "VIDEO STREAM DISPLAY METHOD AND APPARATUS, DEVICE, SYSTEM, AND STORAGE MEDIUM", which is incorporated herein by reference in its entirety.

### TECHNICAL FIELD

This application relates to the field of communication technologies, and in particular, to a video stream display method and apparatus, a device, a system, and a storage medium.

### BACKGROUND

A video conference is a web conference conducted by multiple users using different devices. For example, in the video conference, a transmit end may send shared content to multiple receive ends in a desktop sharing manner while providing presentation, and the receive end can receive and display the shared content sent by the transmit end. However, after the shared content sent by the transmit end changes, for example, after a sharer turns pages of PowerPoint (PowerPoint, PPT) shared by the transmit end, there is a need for a user at the receive end to play back the shared content previous to the change. If the sharer (a user at the transmit end) is interrupted during presentation and is asked to resend previously shared content, this will affect a presentation idea of the sharer, participation experience of users at other receive ends, and overall progress of the video conference.

Therefore, how to display a video stream during video conferencing, allowing for playing back previously shared content without affecting progress of the video conference, is an urgent problem to be resolved.

### SUMMARY

This application provides a video stream display method and apparatus, a device, a system, and a storage medium, to display a video stream of a video conference and a to-be-played-back video frame corresponding to the video stream.

According to a first aspect, a video stream display method is provided. For example, a first device performs the method. The first device receives a video stream of a video conference sent by a second device. The first device displays the video stream on a first interface of the video conference. The first device obtains a to-be-played-back video frame corresponding to the video stream, and displays the to-be-played-back video frame on a second interface of the video conference. The to-be-played-back video frame is a video frame with a playback probability greater than a probability threshold in the video stream.

In the method, the to-be-played-back video frame corresponding to the video stream is obtained, so that the first device can display the video stream of the video conference on the first interface, and display the to-be-played-back video frame corresponding to the video stream on the second interface. In this way, a viewer can play back previous content at any time during the video conference without affecting progress of the video conference, thereby improving display effect of the video stream of the video conference. The first device may be any receive end of the video conference, and the second device may be a transmit end of the video conference or a server end that provides a background service for the video conference. For example, the receive end or the transmit end may be a terminal or a conference software client running on a terminal, and the server end may be a server or an application running on a server that provides a conference background service for a conference software.

In a possible implementation, a manner in which the first device obtains the to-be-played-back video frame corresponding to the video stream includes but is not limited to the following three manners. Manner 1: When a current frame of the video stream is displayed on the first interface, the first device determines, based on a control operation, that the current frame of the video stream is the to-be-played-back video frame. The control operation includes a mouse button operation, a keyboard operation, a touch-and-slide operation, or a touch-and-press operation. In Manner 1, the first device can obtain the to-be-played-back video frame by performing an active control operation, so that the obtained to-be-played-back video frame is more accurate.

Manner 2: When a current frame of the video stream includes a preset identifier, the first device determines that the current frame is the to-be-played-back video frame. The preset identifier is added to the current frame by the second device. In Manner 2, because the preset identifier is added to a corresponding video frame by the second device, the to-be-played-back video frame that can be obtained by the first device is managed and controlled by the second device. This can improve security of the video conference, and can further ensure uniformity of to-be-played-back video frames obtained by multiple first devices.

Manner 3: The first device sends a video frame obtaining instruction to the second device; and the first device receives the to-be-played-back video frame returned by the second device according to the video frame obtaining instruction. In Manner 3, because the first device may directly receive the to-be-played-back video frame sent by the second device, the first device does not need to monitor the control operation, and does not need to identify the preset identifier in the video stream, thereby simplifying a process of obtaining the to-be-played-back video frame by the first device.

In this way, the to-be-played-back video frame corresponding to the video stream can be obtained in all the foregoing three manners. Therefore, a manner in which the first device obtains the to-be-played-back video frame corresponding to the video stream is flexible, thereby improving stability of obtaining the to-be-played-back video frame corresponding to the video stream.

In a possible implementation, after the first device obtains the to-be-played-back video frame corresponding to the video stream, the first device may save the to-be-played-back video frame in an image queue, where the image queue includes multiple to-be-played-back video frames; and then display the to-be-played-back video frame in the image queue on the second interface of the video conference. Through application of the image queue, the obtained multiple to-be-played-back video frames may be managed uniformly, thereby facilitating display of the to-be-played-back video frames. For example, when the to-be-played-back video frame is displayed, selection or switching may also be performed among the multiple to-be-played-back video frames included in the image queue.

In a possible implementation, for the multiple to-be-played-back video frames included in the image queue, the first device may perform an editing operation on any to-be-played-back video frame. The editing operation includes at least one of modification, deletion, mark addition, or search. In this way, the to-be-played-back video frame displayed on the second interface of the video conference may be a video frame after the editing operation, thereby improving display effect of the to-be-played-back video frame.

In a possible implementation, the to-be-played-back video frame is an encrypted video frame. In this way, content leakage of the to-be-played-back video frame can be prevented, and security of the video conference is improved.

In a possible implementation, before displaying the to-be-played-back video frame on the second interface of the video conference, the first device further needs to first receive display authorization sent by the second device. The display authorization is used by the first device to display the to-be-played-back video frame on the second interface. Through issuance of the display authorization, a receive end that can display the to-be-played-back video frame may be controlled. In this way, the authorization may not be issued to a receive end with low security, so that security of the video conference can also be improved.

In a possible implementation, the first device may actively send an authorization request to the second device, so that the second device returns the display authorization based on the authorization request. In this way, a manner in which the receive end can actively obtain the authorization is provided, so that the first device can obtain corresponding display authorization.

In a possible implementation, the first interface and the second interface are the same or different. If the first interface and the second interface may be a same interface, the same interface alternately displays the video stream and the to-be-played-back video frame. If the first interface and the second interface may alternatively be two different interfaces, the two different interfaces may be displayed simultaneously. In this way, display manners of the video stream and the to-be-played-back video frame are flexible.

According to a second aspect, a video stream display method is provided. For example, a second device performs the method. The second device sends a video stream of a video conference to a first device. The video stream is used by the first device to display the video stream on a first interface of the video conference, obtain a to-be-played-back video frame corresponding to the video stream, and display the to-be-played-back video frame on a second interface of the video conference. The to-be-played-back video frame is a video frame with a playback probability greater than a probability threshold in the video stream.

In the method, the to-be-played-back video frame corresponding to the video stream is obtained, so that the first device can display the video stream of the video conference on the first interface, and display the to-be-played-back video frame corresponding to the video stream on the second interface. In this way, a viewer can play back previous content at any time during the video conference without affecting progress of the video conference, thereby improving display effect of the video stream of the video conference. The first device may be any receive end of the video conference, and the second device may be a transmit end of the video conference or a server that provides a background service for the video conference.

In a possible implementation, the second device identifies a to-be-played-back video frame in the video stream, and adds a preset identifier to the identified to-be-played-back video frame. In this way, the to-be-played-back video frame that is in the video stream and that is received by the first device includes the preset identifier, and the first device obtains, based on the preset identifier, the to-be-played-back video frame corresponding to the video stream.

In a possible implementation, a manner in which the second device identifies the to-be-played-back video frame may be as follows: If image content of a current frame of the video stream appears for a first time in the video stream, the second device adds the preset identifier to the current frame as the to-be-played-back video frame. A video frame with the image content that appears for the first time in the video stream is used as the to-be-played-back video frame, so that the to-be-played-back video frame can usually include content of each image in the video conference, and a requirement of the receive end for playing back the to-be-played-back video frame can be met.

In a possible implementation, when the second device identifies that the image content of the current frame of the video stream appears for the first time in the video stream, in addition to adding the preset identifier to the identified to-be-played-back video frame, the second device may further save the current frame as the to-be-played-back video frame. In this way, when a video frame obtaining instruction sent by the first device is received, the second device can return the to-be-played-back video frame to the first device.

In a possible implementation, a manner in which the second device saves the to-be-played-back video frame may be as follows: The second device saves the current frame as the to-be-played-back video frame in an image queue, where the image queue includes multiple to-be-played-back video frames. In this way, when an editing instruction sent by the first device is received, the second device may perform an editing operation on the to-be-played-back video frame in the image queue according to the editing instruction. The editing operation includes at least one of modification, deletion, mark addition, or search.

In a possible implementation, a manner in which the second device determines that the image content of the current frame of the video stream appears for the first time in the video stream may be: determining, based on the current frame of the video stream being a video frame with a corresponding encoding bandwidth changed in the video stream, that the image content of the current frame appears for the first time in the video stream; or determining, based on a similarity between the current frame of the video stream and a historical frame of the video stream being less than a similarity threshold, that the image content of the current frame appears for the first time in the video stream, where the historical frame is a video frame before the current frame and with a distance less than a distance threshold from the current frame in the video stream.

In both the foregoing two different manners, the image content can be identified to be the video frame that appears for the first time in the video stream, so that the identified video frame in which the image content appears for the first time in the video stream is more comprehensive. In this way, the to-be-played-back video frame determined based on the video frame in which the image content appears for the first time in the video stream is more comprehensive, thereby better meeting a requirement of the receive end for playback.

In a possible implementation, the to-be-played-back video frame is an encrypted video frame.

In a possible implementation, the second device sends display authorization to the first device. The display authorization is used by the first device to display the to-be-played-back video frame on the second interface.

In a possible implementation, after receiving an authorization request sent by the first device, the second device sends the display authorization to the first device based on the authorization request.

In a possible implementation, the first interface and the second interface are the same or different.

According to a third aspect, a video stream display apparatus is provided, used in a first device. The apparatus includes:
a receiving module, configured to receive a video stream of a video conference sent by a second device;
a display module, configured to display the video stream on a first interface of the video conference; and
an obtaining module, configured to obtain a to-be-played-back video frame corresponding to the video stream, where the to-be-played-back video frame is a video frame with a playback probability greater than a probability threshold in the video stream.

The display module is further configured to display the to-be-played-back video frame on a second interface of the video conference.

In a possible implementation, the obtaining module is configured to: when a current frame of the video stream is displayed on the first interface, determine, based on a control operation, that the current frame of the video stream is the to-be-played-back video frame. The control operation includes a mouse button operation, a keyboard operation, a touch-and-slide operation, or a touch-and-press operation.

In a possible implementation, the obtaining module is configured to: if a current frame of the video stream includes a preset identifier, determine that the current frame is the to-be-played-back video frame. The preset identifier is added to the current frame by the second device.

In a possible implementation, the obtaining module is configured to: send a video frame obtaining instruction to the second device; and receive the to-be-played-back video frame returned by the second device according to the video frame obtaining instruction.

In a possible implementation, the apparatus further includes a saving module, configured to save the to-be-played-back video frame in an image queue. The image queue includes multiple to-be-played-back video frames.

The display module is configured to display the to-be-played-back video frame in the image queue on the second interface of the video conference.

In a possible implementation, the apparatus further includes an editing module, configured to perform an editing operation on the to-be-played-back video frame in the image queue. The editing operation includes at least one of modification, deletion, mark addition, or search.

In a possible implementation, the to-be-played-back video frame is an encrypted video frame.

In a possible implementation, the receiving module is further configured to receive display authorization sent by the second device. The display authorization is used by the first device to display the to-be-played-back video frame on the second interface.

In a possible implementation, the apparatus further includes a sending module, configured to send an authorization request to the second device. The authorization request is used by the second device to return the display authorization.

In a possible implementation, the first interface and the second interface are the same or different.

According to a fourth aspect, a video stream display apparatus is provided, used in a second device. The apparatus includes:
a sending module, configured to send a video stream of a video conference to a first device. The video stream is used by the first device to display the video stream on a first interface of the video conference, obtain a to-be-played-back video frame corresponding to the video stream, and display the to-be-played-back video frame on a second interface of the video conference, and the to-be-played-back video frame is a video frame with a playback probability greater than a probability threshold in the video stream.

In a possible implementation, the to-be-played-back video frame corresponding to the video stream includes a preset identifier, and the preset identifier is used by the first device to obtain, based on the preset identifier, the to-be-played-back video frame corresponding to the video stream. The apparatus further includes:
an adding module, configured to: if image content of a current frame of the video stream appears for a first time in the video stream, add the preset identifier to the current frame as the to-be-played-back video frame.

In a possible implementation, the apparatus further includes a saving module, configured to: if image content of a current frame of the video stream appears for a first time in the video stream, save the current frame as the to-be-played-back video frame.

The sending module is further configured to: when a video frame obtaining instruction sent by the first device is received, return the to-be-played-back video frame to the first device.

In a possible implementation, the saving module is configured to save the current frame as the to-be-played-back video frame in an image queue. The image queue includes multiple to-be-played-back video frames.

The apparatus further includes an editing module, configured to: when an editing instruction sent by the first device is received, perform an editing operation on the to-be-played-back video frame in the image queue according to the editing instruction. The editing operation includes at least one of modification, deletion, mark addition, or search.

In a possible implementation, the apparatus further includes a determining module, configured to determine, based on the current frame of the video stream being a video frame with a corresponding encoding bandwidth changed in the video stream, that the image content of the current frame appears for the first time in the video stream; or configured to determine, based on a similarity between the current frame of the video stream and a historical frame of the video stream being less than a similarity threshold, that the image content of the current frame appears for the first time in the video stream, where the historical frame is a video frame before the current frame and with a distance less than a distance threshold from the current frame in the video stream.

In a possible implementation, the to-be-played-back video frame is an encrypted video frame.

In a possible implementation, the sending module is further configured to send display authorization to the first device. The display authorization is used by the first device to display the to-be-played-back video frame on the second interface.

In a possible implementation, the apparatus further includes a receiving module, configured to receive an authorization request sent by the first device.

The sending module is further configured to send the display authorization to the first device based on the authorization request.

In a possible implementation, the first interface and the second interface are the same or different.

According to a fifth aspect, an embodiment of this application provides a computing device cluster, including at least one computing device. Each computing device includes a processor and a memory. The processor of the at least one computing device is configured to execute instructions stored in the memory of the at least one computing device, so that the computing device cluster performs the video stream display method according to any one of the first aspect or the possible implementations of the first aspect, or the computing device cluster performs the video stream display method according to any one of the second aspect or the possible implementations of the second aspect.

According to a sixth aspect, an embodiment of this application provides a computer program product including instructions. When the instructions are run by a computing device cluster, the computing device cluster is caused to perform the video stream display method according to any one of the first aspect or the possible implementations of the first aspect, or the computing device cluster is caused to perform the video stream display method according to any one of the second aspect or the possible implementations of the second aspect. The computer program product may be a software installation package. When a function of the foregoing computing device cluster needs to be implemented, the computer program product may be downloaded and executed on the computing device cluster.

According to a seventh aspect, an embodiment of this application provides a computer-readable storage medium, including computer program instructions. When the computer program instructions are executed by a computing device cluster, the computing device cluster performs the video stream display method according to any one of the first aspect or the possible implementations of the first aspect, or the computing device cluster performs the video stream display method according to any one of the second aspect or the possible implementations of the second aspect. The storage medium includes but is not limited to a volatile memory, for example, a random access memory, or a non-volatile memory, for example, a flash memory, a hard disk drive (hard disk drive, HDD), or a solid-state drive (solid-state drive, SSD).

It should be understood that, for beneficial effects achieved by the technical solutions in the second aspect to the seventh aspect and the corresponding possible implementations in this application, refer to the foregoing technical effects in the first aspect and the corresponding possible implementations of the first aspect. Details are not described herein again.

### BRIEF DESCRIPTION OF DRAWINGS

FIG. 1 is a diagram of an implementation environment of a video stream display method according to an embodiment of this application;
FIG. 2 is a flowchart of a video stream display method according to an embodiment of this application;
FIG. 3 is a logical block diagram of sending a video stream by a second device according to an embodiment of this application;
FIG. 4 is another logical block diagram of sending a video stream by a second device according to an embodiment of this application;
FIG. 5 is a logical block diagram of sending a video stream and a to-be-played-back video frame by a second device according to an embodiment of this application;
FIG. 6 is another logical block diagram of sending a video stream and a to-be-played-back video frame by a second device according to an embodiment of this application;
FIG. 7 is a logical block diagram of receiving a video stream by a first device according to an embodiment of this application;
FIG. 8 is a diagram of a first interface and a second interface according to an embodiment of this application;
FIG. 9 is a logical block diagram of receiving a video stream and obtaining a to-be-played-back video frame by a first device according to an embodiment of this application;
FIG. 10 is a diagram of displaying and editing a to-be-played-back video frame by a first device according to an embodiment of this application;
FIG. 11 is a diagram of a video stream display method according to an embodiment of this application;
FIG. 12 is a diagram of another video stream display method according to an embodiment of this application;
FIG. 13 is a diagram of a structure of a video stream display apparatus according to an embodiment of this application;
FIG. 14 is a diagram of a structure of another video stream display apparatus according to an embodiment of this application;
FIG. 15 is a diagram of a hardware structure of a computing device according to an embodiment of this application;
FIG. 16 is a diagram of a structure of a computing device cluster according to an embodiment of this application; and
FIG. 17 is a diagram of a connection manner of a computing device cluster according to an embodiment of this application.

### DESCRIPTION OF EMBODIMENTS

To make the objectives, technical solutions, and advantages of this application clearer, the following further describes the implementations of this application in detail with reference to the accompanying drawings.

With rapid development of video conferencing, a form of video conferencing through desktop sharing has become the mainstream. A transmit end of a video conference is a sharer, while a receive end of the video conference is a viewer. During video conferencing through desktop sharing between the sharer and the viewer, how the viewer can play back, without affecting progress of the video conference, shared content previously sent by the sharer is an urgent problem to be resolved.

In related technologies, files are uploaded by using video conference software before or during the video conference, and the viewer needs to download the files in advance, and browses content in the downloaded files for playback of conference content. Alternatively, the viewer takes screenshots locally to retain content that the viewer may expect playback. However, file uploading requires complex operations and has a risk of file leakage. For local screenshot, because the video conference software may perform anti-screenshot processing, the viewer cannot take screenshots locally. For example, in a confidential conference, the anti-screenshot processing is usually performed to ensure confidentiality of the video conference.

An embodiment of this application provides a video stream display method. In addition to displaying a video stream of a video conference, the viewer can further display a to-be-played-back video frame corresponding to the video stream. The sharer may be unaware of and is not affected by this process. In this way, the method improves display effect of the video stream of the video conference, and achieves an objective that the viewer can play back previously shared content at any time without affecting progress of the video conference. In addition, because a file does not need to be downloaded, implementation of the method is more simple. Besides, because the method is not limited by anti-screenshot processing, the method is applicable to a conference scenario in which anti-screenshot processing is performed, for example, a confidential conference, and an application scope is wider.

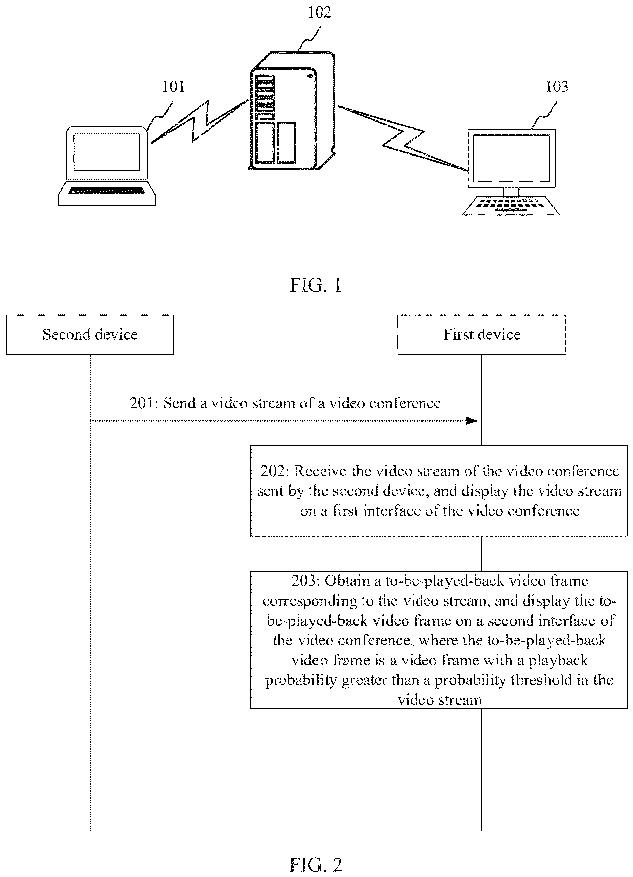

FIG. 1 is a diagram of an implementation environment of a video stream display method according to an embodiment of this application. As shown in FIG. 1, the implementation environment includes a device 101, a device 102, and a device 103. Both the device 101 and the device 103 are communicatively connected to the device 102 by using a wired network or a wireless network.

In some possible implementations, the device 101 indicates a conference software client running on a terminal, the device 103 indicates a conference software client running on a terminal, and the device 102 indicates a conference software server running on a server. In this implementation, an interaction relationship between the device 101, the device 102, and the device 103 is similar to an interaction relationship between the device 101 and the device 103 as terminals and the device 102 as a server. That is, the device 101 and the device 103 may be conference software clients, or may be terminals. The device 102 may be a conference software server, or may be a server. To avoid repetition, in this specification, an example in which the device 101 and the device 103 are terminals, and the device 102 is a server is used for description.

For example, the device 101 may be a transmit end of the video conference, that is, a sharer, and the device 103 may be a receive end of the video conference, that is, a viewer. In this case, the device 101 may send desktop content of the device 101 to the device 103 in a form of a video stream by using the device 102, and the device 103 displays the video stream received by using the device 102 on an interface of the device 103 for viewing, thereby implementing video conferencing through desktop sharing. Optionally, the device 101 and the device 103 may alternatively be directly connected, to implement direct transmission of the video stream. In other words, the method provided in this embodiment of this application may alternatively be implemented in an implementation environment in which the device 102 is omitted.

In this embodiment of this application, the device 103 can further obtain and display a to-be-played-back video frame corresponding to the video stream. The to-be-played-back video frame is a video frame with a playback probability greater than a probability threshold in the video stream. For descriptions of the playback probability and the probability threshold, refer to subsequent descriptions. Details are not described herein. The device 103 includes a first interface and a second interface. The first interface is used to display the video stream of the video conference, and the second interface is used to display the to-be-played-back video frame corresponding to the video stream. If the first interface and the second interface may be a same interface, the same interface alternately displays the video stream and the to-be-played-back video frame; or if the first interface and the second interface may be different interfaces, the two different interfaces may be displayed simultaneously.

If the device 101 and the device 103 are clients, the client may be any application that has a video conference function and that runs on a terminal, for example, an instant messaging application, a video conference application, or a live broadcast application. If the device 101 and the device 103 are terminals, the terminal may be any electronic product that can perform human-machine interaction with an interaction object by using one or more of a keyboard, a touchpad, a touchscreen, a remote control, a voice interaction device, or a handwriting device. For example, the terminal is a PC (personal computer, personal computer), a mobile phone, a smartphone, a computer, a tablet computer, a smart voice interaction device, or a smart television. In this embodiment of this application, only the device 101 and the device 103 are used as an example for description. Optionally, there may be multiple devices 101 and devices 103, for example, dozens or hundreds of devices 101 and devices 103. That is, there may be any quantity of transmit ends and receive ends of the video conference.

If the device 102 is a conference software server, the conference software server may be any application that runs on a server and provides a background service for application software or an application having a video conference function. If the device 102 is a server, the server may be one server, or a server cluster including multiple servers, or either of a cloud computing platform and a virtualization center. This is not limited in this embodiment of this application. The device 102 has a data receiving function, a data processing function, and a data sending function. Certainly, the device 102 may further have another function. This is not limited in this embodiment of this application.

A person skilled in the art should understand that the device 101, the device 102, and the device 103 are merely examples, and another existing or future possible conference software client, terminal, conference software server, or server that may be applied to this application should also fall within the protection scope of this application and shall be included herein by reference.

FIG. 2 is a flowchart of a video stream display method according to an embodiment of this application. The method may be applied to the implementation environment shown in FIG. 1. As shown in FIG. 2, the video stream display method includes but is not limited to the following step 201 to step 203.

Step 201: A second device sends a video stream of a video conference to a first device.

In this embodiment of this application, the second device may be a transmit end of the video conference, that is, a sharer, and the first device may be a receive end of the video conference, that is, a viewer. Optionally, an application scenario of the video conference is not limited in this embodiment of this application. For example, the video conference may be in a desktop sharing manner or in a video call manner. Regardless of the application scenario of the video conference, the transmit end of the video conference sends the video stream of the video conference to the receive end of the video conference.

A video conference in a desktop sharing manner is used as an example. The second device sends desktop content of the second device to the first device in a form of a video stream, so that the first device displays the received video stream for viewing. In this way, the desktop content displayed on the first device is the same as that displayed on the second device, thereby implementing desktop sharing. Alternatively, the second device may be a server that provides a background service for the video conference. In this case, the second device receives the video stream sent by the transmit end of the video conference, and then forwards the received video stream of the video conference to the first device.

For example, the second device may be the terminal 101 or the server 102 shown in FIG. 1, and the first device may be the terminal 103 shown in FIG. 1. When the second device is the terminal 101 shown in FIG. 1, the second device may send the video stream of the video conference to the first device by using the server 102. When the second device is the server 102 shown in FIG. 1, the second device may send the received video stream of the video conference sent by the terminal 101 to the first device.

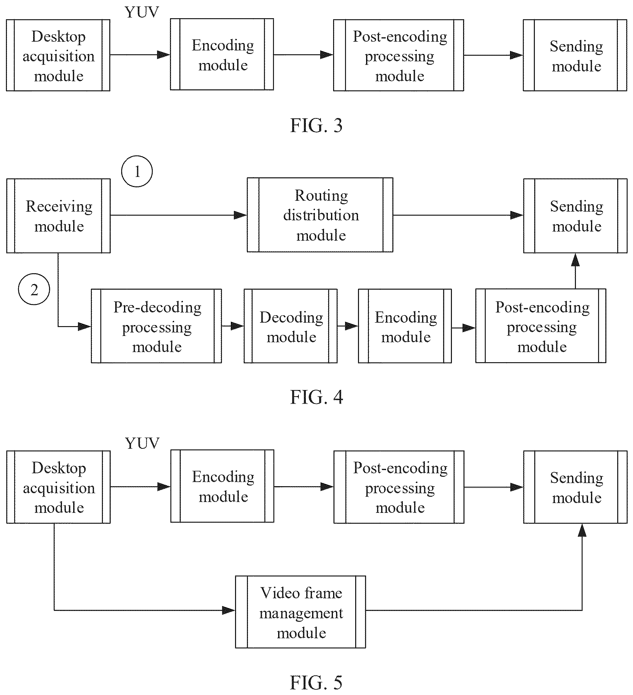

For example, the second device is the terminal 101 shown in FIG. 1. FIG. 3 is a logical block diagram of sending the video stream by the second device according to an embodiment of this application. As shown in FIG. 3, the second device performs desktop acquisition on the desktop content of the second device by using a desktop acquisition module to obtain desktop data, encodes the acquired desktop data by using an encoding module, processes the encoded desktop data by using a post-encoding processing module to obtain a video stream, and sends the video stream by using a sending module. The desktop data may use a YUV color encoding mode, where Y represents luminance (luminance), also referred to as a grayscale value, U represents chrominance (chrominance), and V represents chroma (chroma). Alternatively, the desktop data may use an RGB color encoding mode, where R represents red (red), G represents green (green), and B represents blue (blue).

For example, the second device is the server 102 shown in FIG. 1. FIG. 4 is another logical block diagram of sending the video stream by the second device according to an embodiment of this application. As shown in FIG. 4, after receiving, by using a receiving module, the video stream sent by the transmit end of the video conference, the second device may implement forwarding by using the following two methods. In a first method, as shown in ① in FIG. 4, the second device adapts a received video stream to a corresponding first device by using a routing distribution module, and then directly forwards the received video stream to the first device by using a sending module. In a second method, as shown in (2) in FIG. 4, the second device processes a received video stream by using a pre-decoding processing module, decodes the processed video stream by using a decoding module, re-encodes the decoded video stream by using an encoding module, obtains, by using a post-encoding processing module, the video stream sent to the first device, and finally sends the video stream to the first device by using a sending module.

In a possible implementation, regardless of whether the second device is the terminal 101 or the server 102 shown in FIG. 1, when the second device sends the video stream of the video conference to the first device, the second device may further obtain the to-be-played-back video frame corresponding to the video stream. The to-be-played-back video frame is a video frame with a playback probability greater than a probability threshold in the video stream determined by the second device. The playback probability may be a probability that the viewer may play back the video frame. The probability threshold may be set based on experience, or may be flexibly adjusted based on an application scenario. For example, the probability threshold may be set to 60%. Based on statistical analysis of the viewer of the video conference regarding the to-be-played-back video frame, it can be learned that a probability that a newly appeared frame in the video stream may be viewed is 80%. In this case, the newly appeared frame in the video stream may be considered as the to-be-played-back video frame.

In this embodiment of this application, the second device may identify each frame of the video stream. When it is identified that image content of a current frame of the video stream appears for a first time in the video stream, the current frame is the newly appeared frame in the video stream, and the second device may save the current frame as the to-be-played-back video frame. In this way, when the first device needs to play back the to-be-played-back video frame, the first device may send an obtaining instruction to the second device. When receiving a video frame obtaining instruction sent by the first device, the second device may return the to-be-played-back video frame to the first device for playing back by the second device.

In this embodiment of this application, a manner in which the second device identifies that the image content of the current frame of the video stream appears for the first time in the video stream is not limited. For example, the second device may determine, based on the current frame of the video stream being a video frame with a corresponding encoding bandwidth changed in the video stream, that the image content of the current frame appears for the first time in the video stream. Because the encoding bandwidth of the video frame is determined by the image content of the video frame, the encoding bandwidth changes as the image content changes, and the encoding bandwidth usually remains unchanged when the image content is stationary. Therefore, a frame of image in which a shared desktop changes and then become stationary can be identified by detecting a change of the encoding bandwidth, for example, in a PPT slide-flipping scenario.

Alternatively, the second device may determine, based on a similarity between the current frame of the video stream and a historical frame of the video stream being less than a similarity threshold, that the image content of the current frame appears for the first time in the video stream. The historical frame is a video frame before the current frame and with a distance less than a distance threshold from the current frame in the video stream. Both the similarity threshold and the distance threshold may be set based on experience, or may be flexibly adjusted based on an application scenario. For example, the similarity threshold is 70%, and the distance threshold is 5 seconds (second, s). A frame is acquired every 5 seconds, and a similarity between a currently acquired frame and a frame acquired before 5s is compared. If the similarity is less than 70%, it is determined that the image content of the current frame appears for the first time in the video stream. A manner of calculating the similarity may be obtaining two frames of grayscale images and comparing percentages of same pixels in the two frames of grayscale images; or using an image hash algorithm. The hash algorithm may be average hash, difference hash, perceptual hash, or the like.

Optionally, a manner in which the second device saves the to-be-played-back video frame may be as follows: The second device saves the current frame as the to-be-played-back video frame in an image queue, where the image queue includes multiple to-be-played-back video frames. In this case, for the image queue included in the second device, when the second device receives an editing instruction sent by the first device, the second device may perform an editing operation on the to-be-played-back video frame in the image queue according to the editing instruction. The editing operation includes but is not limited to at least one of modification, deletion, mark addition, or search. The modification may be modification performed after text recognition or text translation is performed on the video frame. The to-be-played-back video frame saved in the second device may be an encrypted to-be-played-back video frame. An encryption processing manner is not limited in this embodiment of this application. For example, the encryption processing manner may be adding an annotation, adding a watermark, or the like.

In a possible implementation, after identifying the current frame as the to-be-played-back video frame, the second device may not save the to-be-played-back video frame, but add a preset identifier to the current frame, so that the to-be-played-back video frame in the video stream sent to the first device includes the preset identifier. In this way, after receiving the video stream, the first device may identify the video frame that includes the preset identifier in the video stream as the to-be-played-back video frame, so that the first device obtains the to-be-played-back video frame.

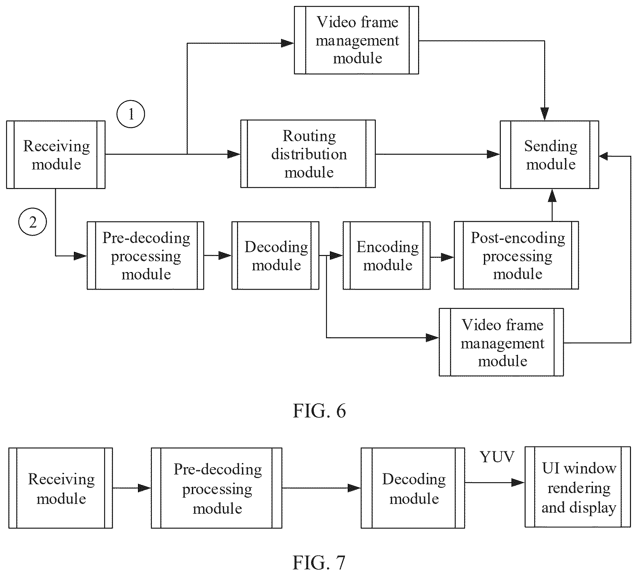

In conclusion, when the second device obtains the to-be-played-back video frame corresponding to the video stream, refer to FIG. 5. FIG. 5 is a logical block diagram of sending the video stream and the to-be-played-back video frame by the second device according to an embodiment of this application. A video frame management module is added in FIG. 5 compared with FIG. 3. Similarly, FIG. 6 is another logical block diagram of sending the video stream and the to-be-played-back video frame by the second device according to an embodiment of this application. Video frame management modules are added in both the forwarding methods in FIG. 6 compared with FIG. 4. Video frame management modules in FIG. 5 and FIG. 6 are configured to perform related operations of obtaining the to-be-played-back video frame corresponding to the video stream by the second device.

Step 202: The first device receives the video stream of the video conference sent by the second device, and displays the video stream on a first interface of the video conference.

In this embodiment of this application, the first device displays the received video stream of the video conference on the first interface, so that the viewer can view the video stream. FIG. 7 is a logical block diagram of receiving the video stream by the first device according to an embodiment of this application. As shown in FIG. 7, the first device receives, by using a receiving module, the video stream sent by the second device, processes the received video stream by using a pre-decoding processing module, decodes the processed video stream by using a decoding module to obtain corresponding YUV data, and renders and displays the YUV data on the first interface. For example, the first interface may be a user interface (user interface, UI) window.

Step 203: The first device obtains the to-be-played-back video frame corresponding to the video stream, and displays the to-be-played-back video frame on a second interface of the video conference, where the to-be-played-back video frame is a video frame with a playback probability greater than a probability threshold in the video stream.

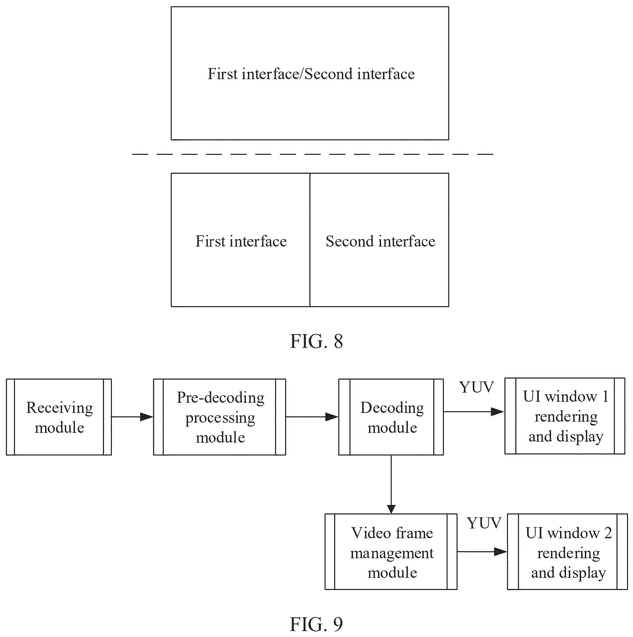

In this embodiment of this application, the first device further includes the second interface, to display the to-be-played-back video frame on the second interface, thereby implementing playback of the video stream without affecting reception and display of an original video stream. Optionally, as shown above a dashed line in FIG. 8, the first interface and the second interface may be a same interface, and the same interface alternately displays the video stream and the to-be-played-back video frame. Alternatively, as shown below the dashed line in FIG. 8, the first interface and the second interface may be two different interfaces, and the two different interfaces may be displayed simultaneously.

In a possible implementation, before the first device obtains the to-be-played-back video frame corresponding to the video stream, the first device needs to first obtain display authorization. The display authorization is used by the first device to display the to-be-played-back video frame on the second interface. Optionally, the display authorization may be further used by the first device to perform an editing operation on the to-be-played-back video frame. A manner in which the first device obtains the display authorization may be as follows: The first device sends an authorization request to the second device, and the second device returns corresponding display authorization to the second device based on the authorization request sent by the first device; or the second device uniformly issues authorization to the receive end connected to the video conference, that is, the second device actively sends the display authorization to the first device.

For example, for a video conference having a low security requirement, the first device may set, on a management interface of the video conference of the first device, a switch to display the to-be-played-back video frame or not, and the first device obtains the display authorization by performing a turn-on operation on the switch to displaying the to-be-played-back video frame. The management interface of the video conference is used for operations such as function setting and configuration adjustment on the video conference. The management interface may be hidden as a hidden icon during video conferencing. When the video conference needs to be managed, the management interface may be displayed by tapping the hidden icon. For example, the management interface may be displayed on the first interface and the second interface in an overlay manner, or displayed around the first interface and the second interface. For a video conference having a high security requirement, the second device needs to uniformly enable or disable a permission whether the first device obtains the display authorization, or the first device applies to the second device for the permission of the display authorization. After the second device authorizes the first device, the first device may display the to-be-played-back video frame on the second interface. On a basis of displaying the to-be-played-back video frame on the second interface by the first device, the first device may perform a security operation such as anti-screenshot processing on the second interface, or adding a watermark to the second interface.

Optionally, a manner in which the first device obtains the to-be-played-back video frame corresponding to the video stream is not limited in this embodiment of this application. For example, when the current frame of the video stream is displayed on the first interface, the first device determines, based on a control operation, that the current frame of the video stream is the to-be-played-back video frame. The control operation includes a mouse button operation, a keyboard operation, a touch-and-slide operation, or a touch-and-press operation. In this case, the viewer may directly trigger, by performing the control operation on the first device, the first device to determine the to-be-played-back video frame.

Alternatively, when the current frame of the video stream includes the preset identifier, the first device determines that the current frame is the to-be-played-back video frame. The preset identifier is added by the second device when identifying the to-be-played-back video frame in step 201. Alternatively, the first device sends the video frame obtaining instruction to the second device, and receives the to-be-played-back video frame returned by the second device according to the video frame obtaining instruction. In this case, after identifying the to-be-played-back video frame, the second device saves the to-be-played-back video frame in the second device.

In step 203, refer to FIG. 9. FIG. 9 is a logical block diagram of receiving the video stream and obtaining the to-be-played-back video frame by the first device according to an embodiment of this application. A video frame management module and another UI window are added in FIG. 9 compared with FIG. 7. The video frame management module is configured to perform related operations of obtaining the to-be-played-back video frame corresponding to the video stream by the first device. As shown in FIG. 9, the first device may render and display the video stream in a UI window 1, and render and display the to-be-played-back video frame in a UI window 2.

In this way, the first device can obtain, in any one of the foregoing manners, the to-be-played-back video frame corresponding to the video stream, so that the first device may save the obtained to-be-played-back video frame in the image queue of the first device. When the to-be-played-back video frame in the image queue needs to be played back, the to-be-played-back video frame in the image queue may be displayed on the second interface of the video conference. The image queue includes multiple to-be-played-back video frames. As the video conference progresses, the image queue includes more to-be-played-back video frames.

The to-be-played-back video frame obtained by the first device may be an encrypted to-be-played-back video frame. An encryption processing manner is not limited in this embodiment of this application. For example, the encryption processing manner may be adding an annotation, adding a watermark, or the like. Optionally, for the to-be-played-back video frame in the image queue, the first device may perform an editing operation on the to-be-played-back video frame in the image queue. The editing operation may include at least one of modification, deletion, mark addition, or search. The modification may be modification performed after text recognition or text translation is performed on the video frame.

For example, the first device further includes a toolbar corresponding to the video conference, and the toolbar, the first interface, and the second interface are displayed on a same screen. For example, the toolbar is located in a peripheral position of the screen, and the first interface and the second interface are located in a middle position of the screen. The toolbar includes a hidden icon of a setting interface. The setting interface may be displayed on the screen by tapping the hidden icon of the setting interface in the toolbar. For example, the setting interface may be displayed on the second interface in an overlay manner, or may be displayed around the second interface. Through the setting interface, the editing operation such as annotation and modification can be performed on the video frame displayed on the second interface, and an edited video frame may be newly added and saved in the image queue, or an original video frame may be overwritten and saved in the image queue.

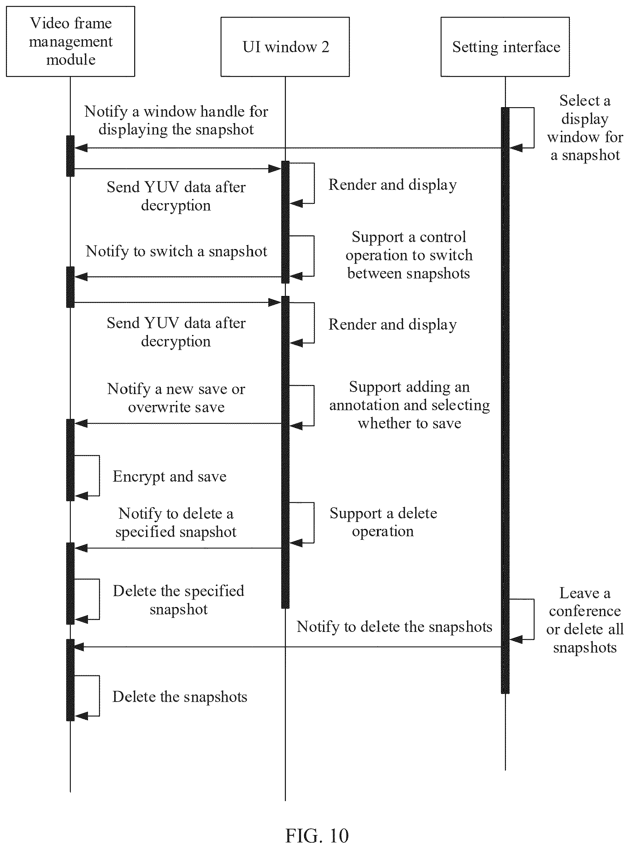

For example, FIG. 10 is a diagram of displaying and editing the to-be-played-back video frame by the first device according to an embodiment of this application. The first device may select, through the setting interface, an interface for displaying the to-be-played-back video frame. In FIG. 10, the to-be-played-back video frame is referred to as a snapshot. For example, a UI window 2 is selected to display the snapshot. The setting interface notifies a video frame management module of a handle of the UI window 2 for displaying the snapshot, where the handle is an identifier used to describe a form, a file, or the like. After receiving the handle of the UI window 2, when the snapshot has been encrypted and saved, the video frame management module decrypts the snapshot and sends corresponding YUV data to the UI window 2. The UI window 2 renders and displays the received YUV data. While displaying the snapshot, the UI window 2 supports a function of switching between different snapshots based on a control operation. The control operation may be a mouse click operation, a keyboard left-right key operation, or the like. When the UI window 2 triggers the control operation, a notification of switching a snapshot is sent to the video frame management module, so that the video frame management module sends decrypted YUV data of a switched snapshot to the UI window 2, and the UI window 2 renders and displays the YUV data corresponding to the switched snapshot.

As shown in FIG. 10, while displaying the snapshot, the UI window 2 further supports a function of adding an annotation to the snapshot and selecting whether to save the snapshot. After the UI window 2 adds an annotation to the currently displayed snapshot and selects to save the snapshot, a new save or overwrite save notification is sent to the video frame management module, so that the video frame management module saves the snapshot with the annotation added. While displaying the snapshot, the UI window 2 further supports a function of deleting a snapshot. When the UI window 2 triggers an operation of deleting a specified snapshot, a notification of deleting the specified snapshot is sent to the video frame management module, so that the video frame management module deletes the specified snapshot. In addition, after the video conference ends, that is, the first device leaves the conference, or when the first device triggers an operation of deleting all snapshots through the setting interface, a notification of deleting the snapshots is sent to the video frame management module, so that the video frame management module deletes all saved snapshots, thereby preventing snapshot leakage and improving security of the video conference.

It can be learned from step 201 to step 203 that, an identification position and a saving position of the to-be-played-back video frame are not limited in this embodiment of this application. The implementation environment shown in FIG. 1 is used as an example. The to-be-played-back video frame may be identified by the terminal 101, the server 102, or the terminal 103, or may be randomly stored in the terminal 101, the server 102, or the terminal 103. When the saving position of the to-be-played-back video frame is the terminal 101 or the server 102, the terminal 103 may send the obtaining instruction to the terminal 101 or the server 102, so that the terminal 101 or the server 102 sends the to-be-played-back video frame to the terminal 103, and the terminal 103 displays the to-be-played-back video frame. The terminal 103 may also send the editing instruction to the terminal 101 or the server 102, so that the terminal 101 or the server 102 performs the editing operation on the saved to-be-played-back video frame.

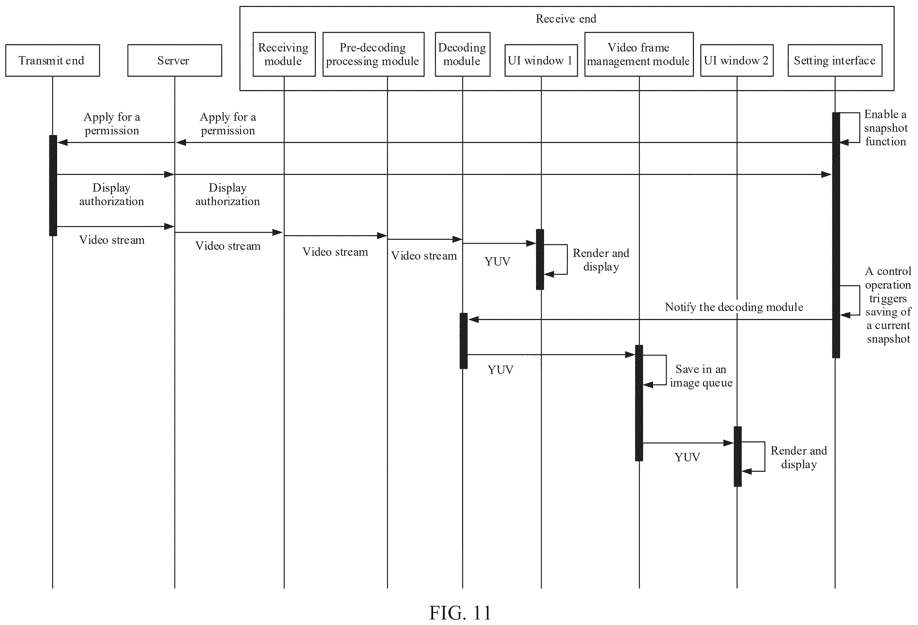

With reference to FIG. 11, the to-be-played-back video frame is referred to as a snapshot. An example in which the first device is a receive end of the video conference, the second device is a transmit end of the video conference, and the receive end locally identifies the snapshot and locally saves the snapshot is used to describe the video stream display method provided in this embodiment of this application. As shown in FIG. 11, the receive end may enable a snapshot function of the video conference through a setting interface, and a start time may be before or during the video conference. Based on enabling of the snapshot function, the receive end applies to a server for authorization, that is, sends an authorization request to the server, and the server forwards the authorization request to the transmit end. In this way, the transmit end can return display authorization to the receive end in a case of being authorized, so that the receive end successfully enables the snapshot function.

The transmit end sends the video stream of the video conference to the receive end by using the server. Optionally, in a scenario of video conferencing through desktop sharing, the video stream is a desktop stream of the transmit end. After receiving the video stream, the receive end obtains, via a receiving module, a pre-decoding processing module, and a decoding module, YUV data corresponding to the video stream, and renders and displays the YUV data on a UI window 1. When the receive end triggers saving of a current snapshot by using a control operation of the setting interface, for example, a click operation, a notification of saving the snapshot is sent to the decoding module, so that the decoding module sends current YUV data to a video frame management module. The video frame management module saves the received YUV data, that is, the snapshot, in a maintained image queue. In this way, the video frame management module may render and display the YUV data on a UI window 2.

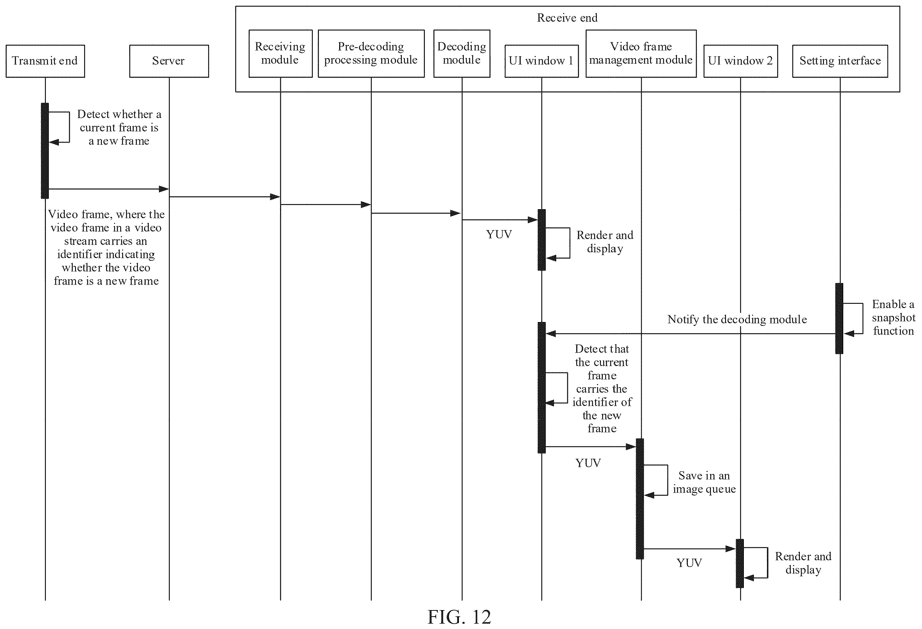

Refer to FIG. 12. An example in which the first device is a receive end of the video conference, the second device is a transmit end of the video conference, the transmit end identifies a snapshot, and the receive end saves the snapshot is used to describe the video stream display method provided in this embodiment of this application. As shown in FIG. 12, the transmit end detects whether each frame in the video stream is a new frame. The new frame is a video frame in which the foregoing image content appears for a first time in the video stream, and a corresponding identifier is added to the detected new frame. In this case, the video frame in the video stream sent by the transmit end to the receive end carries an identifier indicating whether the video frame is a new frame.

After enabling a snapshot function, the receive end notifies a decoding module. After determining that the snapshot function is enabled, the decoding module identifies whether YUV data decoded from the video frame includes the identifier of the new frame. If a current frame carries the identifier of the new frame, YUV data corresponding to the current frame is sent to a video frame management module. The video frame management module saves the received YUV data, that is, the snapshot, in a maintained image queue. In this way, the video frame management module may render and display the YUV data on a UI window 2.

In conclusion, according to the video stream display method provided in this embodiment of this application, the first device can obtain the to-be-played-back video frame corresponding to the video stream, and the first device includes the first interface and the second interface, so that the first device can display the video stream of the video conference on the first interface, and display the to-be-played-back video frame corresponding to the video stream on the second interface. In this process, conference progress is not affected. In this way, the method improves display effect of the video stream of the video conference, and achieves an objective that the viewer can play back previously shared content at any time without affecting progress of the video conference. In addition, because a file does not need to be downloaded, implementation of the method is more simple. Besides, because the method is not limited by anti-screenshot processing, the method is applicable to a conference scenario in which anti-screenshot processing is performed, for example, a confidential conference.

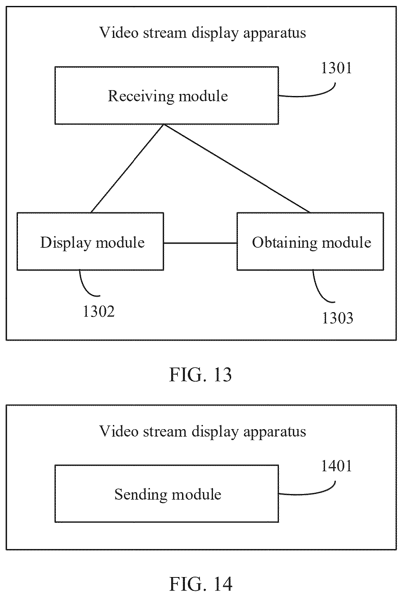

The foregoing describes the video stream display method in embodiments of this application. Corresponding to the foregoing method, an embodiment of this application further provides a video stream display apparatus. FIG. 13 is a diagram of a structure of a video stream display apparatus according to an embodiment of this application. The apparatus is used in a first device. Based on the following multiple modules shown in FIG. 13, the video stream display apparatus shown in FIG. 13 can perform all or some operations performed by the first device. It should be understood that the apparatus may include more additional modules than the shown modules, or some of the shown modules are omitted. This is not limited in this embodiment of this application. As shown in FIG. 13, the apparatus includes:
a receiving module 1301, configured to receive a video stream of a video conference sent by a second device;
a display module 1302, configured to display the video stream on a first interface of the video conference; and
an obtaining module 1303, configured to obtain a to-be-played-back video frame corresponding to the video stream, where the to-be-played-back video frame is a video frame with a playback probability greater than a probability threshold in the video stream.

The display module 1302 is further configured to display the to-be-played-back video frame on a second interface of the video conference.

In a possible implementation, the obtaining module 1303 is configured to: when a current frame of the video stream is displayed on the first interface, determine, based on a control operation, that the current frame of the video stream is the to-be-played-back video frame. The control operation includes a mouse button operation, a keyboard operation, a touch-and-slide operation, or a touch-and-press operation.

In a possible implementation, the obtaining module 1303 is configured to: if a current frame of the video stream includes a preset identifier, determine that the current frame is the to-be-played-back video frame. The preset identifier is added to the current frame by the second device.

In a possible implementation, the obtaining module 1303 is configured to: send a video frame obtaining instruction to the second device; and receive the to-be-played-back video frame returned by the second device according to the video frame obtaining instruction.

In a possible implementation, the apparatus further includes a saving module, configured to save the to-be-played-back video frame in an image queue. The image queue includes multiple to-be-played-back video frames.

The display module 1302 is configured to display the to-be-played-back video frame in the image queue on the second interface of the video conference.

In a possible implementation, the apparatus further includes an editing module, configured to perform an editing operation on the to-be-played-back video frame in the image queue. The editing operation includes at least one of modification, deletion, mark addition, or search.

In a possible implementation, the to-be-played-back video frame is an encrypted video frame.

In a possible implementation, the receiving module 1301 is further configured to receive display authorization sent by the second device. The display authorization is used by the first device to display the to-be-played-back video frame on the second interface.

In a possible implementation, the apparatus further includes a sending module, configured to send an authorization request to the second device. The authorization request is used by the second device to return the display authorization.

In a possible implementation, the first interface and the second interface are the same or different.

FIG. 14 is a diagram of a structure of a video stream display apparatus according to an embodiment of this application. The apparatus is used in a second device. Based on the following multiple modules shown in FIG. 14, the video stream display apparatus shown in FIG. 14 can perform all or some operations performed by the second device. It should be understood that the apparatus may include more additional modules than the shown modules, or some of the shown modules are omitted. This is not limited in this embodiment of this application. As shown in FIG. 14, the apparatus includes:
a sending module 1401, configured to send a video stream of a video conference to a first device. The video stream is used by the first device to display the video stream on a first interface of the video conference, obtain a to-be-played-back video frame corresponding to the video stream, and display the to-be-played-back video frame on a second interface of the video conference, and the to-be-played-back video frame is a video frame with a playback probability greater than a probability threshold in the video stream.

In a possible implementation, the to-be-played-back video frame corresponding to the video stream includes a preset identifier, and the preset identifier is used by the first device to obtain, based on the preset identifier, the to-be-played-back video frame corresponding to the video stream. The apparatus further includes:
an adding module, configured to: if image content of a current frame of the video stream appears for a first time in the video stream, add the preset identifier to the current frame as the to-be-played-back video frame.

In a possible implementation, the apparatus further includes a saving module, configured to: if image content of a current frame of the video stream appears for a first time in the video stream, save the current frame as the to-be-played-back video frame.

The sending module 1401 is further configured to: when a video frame obtaining instruction sent by the first device is received, return the to-be-played-back video frame to the first device.

In a possible implementation, the saving module is configured to save the current frame as the to-be-played-back video frame in an image queue. The image queue includes multiple to-be-played-back video frames.

The apparatus further includes an editing module, configured to: when an editing instruction sent by the first device is received, perform an editing operation on the to-be-played-back video frame in the image queue according to the editing instruction. The editing operation includes at least one of modification, deletion, mark addition, or search.

In a possible implementation, the apparatus further includes a determining module, configured to determine, based on the current frame of the video stream being a video frame with a corresponding encoding bandwidth changed in the video stream, that the image content of the current frame appears for the first time in the video stream; or configured to determine, based on a similarity between the current frame of the video stream and a historical frame of the video stream being less than a similarity threshold, that the image content of the current frame appears for the first time in the video stream, where the historical frame is a video frame before the current frame and with a distance less than a distance threshold from the current frame in the video stream.

In a possible implementation, the to-be-played-back video frame is an encrypted video frame.

In a possible implementation, the sending module 1401 is further configured to send display authorization to the first device. The display authorization is used by the first device to display the to-be-played-back video frame on the second interface.

In a possible implementation, the apparatus further includes a receiving module, configured to receive an authorization request sent by the first device. The sending module 1401 is further configured to send the display authorization to the first device based on the authorization request.

In a possible implementation, the first interface and the second interface are the same or different.

The video stream display apparatus provided in this embodiment of this application improves display effect of the video stream of the video conference, and achieves an objective that the viewer can play back previously shared content at any time without affecting progress of the video conference. In addition, because a file does not need to be downloaded, implementation of the method is more simple. Besides, because the method is not limited by anti-screenshot processing, the method is applicable to a conference scenario in which anti-screenshot processing is performed, for example, a confidential conference.

It should be understood that, when the apparatus provided in FIG. 13 or FIG. 14 implements functions of the apparatus, division into the foregoing functional modules is merely used as an example for description. During actual application, the foregoing functions may be allocated to different functional modules for implementation based on a requirement. In other words, a device is divided into different functional modules in terms of an inner structure, to implement all or some of the foregoing functions. In addition, the apparatuses provided in the foregoing embodiments and the method embodiments pertain to a same concept. For a specific implementation process of the apparatuses, refer to the method embodiments. Details are not described herein again.

In addition, using the video stream display apparatus shown in FIG. 13 as an example, the receiving module 1301, the display module 1302, and the obtaining module 1303 may all be implemented by using software or hardware. For example, the following uses the receiving module 1301 as an example to describe an implementation of the receiving module 1301. Similarly, for implementations of the display module 1302, the obtaining module 1303, and other modules, refer to the implementation of the receiving module 1301. For example, for implementations of the modules in the video stream display apparatus shown in FIG. 14, refer to the implementation of the receiving module 1301.

The module is used as an example of a software functional unit, and the receiving module 1301 may include code run on a computing instance. The computing instance may include at least one of a physical host (computing device), a virtual machine, and a container. Further, there may be one or more computing instances. For example, the receiving module 1301 may include code run on multiple hosts/virtual machines/containers. It should be noted that the multiple hosts/virtual machines/containers configured to run the code may be distributed in a same region (region), or may be distributed in different regions. Further, the multiple hosts/virtual machines/containers configured to run the code may be distributed in a same availability zone (availability zone, AZ), or may be distributed in different AZs. Each AZ includes one data center or multiple data centers that are geographically close to each other. Generally, one region may include multiple AZs.

Similarly, the multiple hosts/virtual machines/containers configured to run the code may be distributed in a same virtual private cloud (virtual private cloud, VPC), or may be distributed in multiple VPCs. Generally, one VPC is set in one region (region). A communication gateway needs to be set in each VPC for communication between two VPCs in a same region and cross-region communication between VPCs in different regions. The VPCs are interconnected through the communication gateway.

The module is used as an example of a hardware functional unit, and the receiving module 1301 may include at least one computing device. Alternatively, the receiving module 1301 may be a device implemented by an application-specific integrated circuit (application-specific integrated circuit, ASIC), a programmable logic device (programmable logic device, PLD), or the like. The PLD may be implemented by a complex programmable logic device (complex programmable logic device, CPLD), a field-programmable gate array (field-programmable gate array, FPGA), generic array logic (generic array logic, GAL), or any combination thereof.

Multiple computing devices included in the receiving module 1301 may be distributed in a same region, or may be distributed in different regions. The multiple computing devices included in the receiving module 1301 may be distributed in a same AZ, or may be distributed in different AZs. Similarly, the multiple computing devices included in the receiving module 1301 may be distributed in a same VPC, or may be distributed in multiple VPCs. The multiple computing devices may be any combination of computing devices such as a server, an ASIC, a PLD, a CPLD, an FPGA, or GAL.

It should be noted that, in another embodiment, the receiving module 1301 may be configured to perform any step in the video stream display method, that is, steps implemented by the receiving module 1301, the display module 1302, and the obtaining module 1303 may be specified as required, and the receiving module 1301, the display module 1302, and the obtaining module 1303 respectively implement different steps in the video stream display method to implement all functions of the video stream display apparatus. In addition, the video stream display apparatuses provided in the foregoing embodiments and the video stream display method embodiments pertain to a same concept. For a specific implementation process of the apparatuses, refer to the method embodiments. Details are not described herein again.

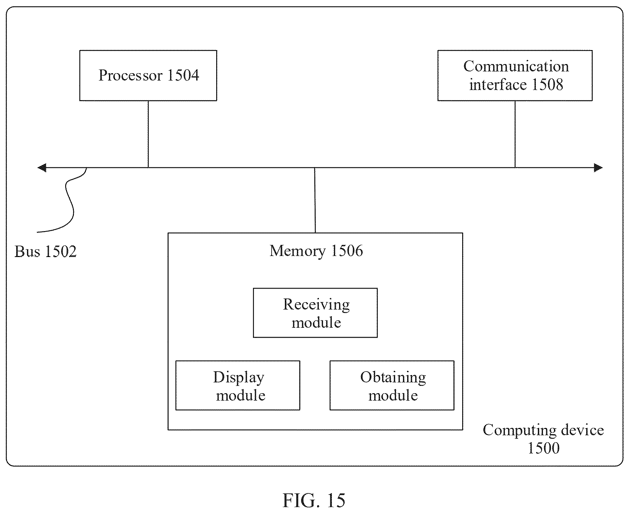

This application further provides a computing device that can be configured as a device in the foregoing implementation environment. FIG. 15 is a diagram of a hardware structure of the computing device according to an embodiment of this application. As shown in FIG. 15, the computing device 1500 includes a bus 1502, a processor 1504, a memory 1506, and a communication interface 1508. The processor 1504, the memory 1506, and the communication interface 1508 communicate with each other through the bus 1502. It should be understood that a quantity of processors and a quantity of memories in the computing device 1500 are not limited in this application.

The bus 1502 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used to represent the bus in FIG. 15, but this does not mean that there is only one bus or only one type of bus. The bus 1502 may include a path for transferring information between various components (for example, the memory 1506, the processor 1504, and the communication interface 1508) of the computing device 1500.

The processor 1504 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1506 may include a volatile memory (volatile memory), for example, a random access memory (random access memory, RAM). The processor 1504 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 1506 stores executable program code, and the processor 1504 executes the executable program code to separately implement functions of the receiving module 1301, the display module 1302, and the obtaining module 1303, to implement the video stream display method. That is, the memory 1506 stores instructions for performing the video stream display method.

The communication interface 1508 implements communication between the computing device 1500 and another device or a communication network by using a transceiver module, for example, but not limited to a network interface card or a transceiver.

An embodiment of this application further provides a computing device cluster. The computing device cluster includes at least one computing device. The computing device may be configured as a device in the foregoing implementation environment.

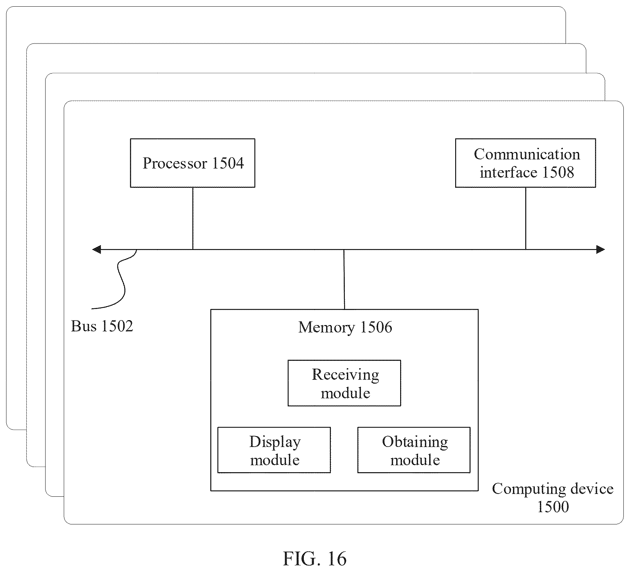

FIG. 16 is a diagram of a structure of the computing device cluster according to an embodiment of this application. As shown in FIG. 16, the computing device cluster includes at least one computing device 1500. Memories 1506 in one or more computing devices 1500 in the computing device cluster may store same instructions for performing the video stream display method.

In some possible implementations, the memories 1506 in the one or more computing devices 1500 in the computing device cluster may alternatively separately store some instructions for performing the video stream display method. In other words, a combination of one or more computing devices 1500 may jointly execute instructions for performing the video stream display method.

It should be noted that memories 1506 in different computing devices 1500 in the computing device cluster may store different instructions, and are respectively configured to perform some functions of the video stream display apparatus. In other words, instructions stored in the memories 1506 in different computing devices 1500 may implement functions of one or more of the receiving module 1301, the display module 1302, and the obtaining module 1303.

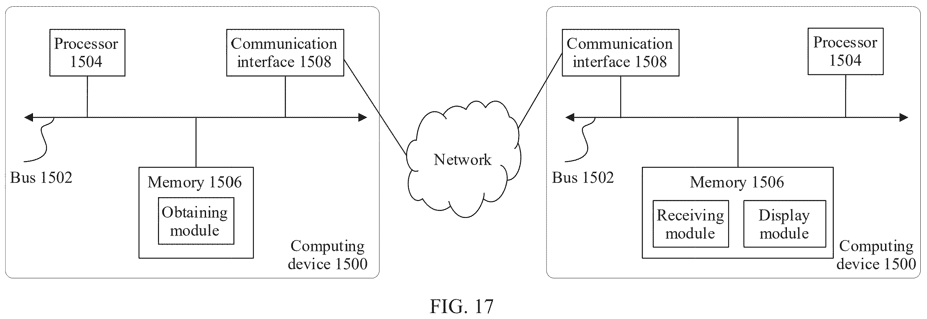

In some embodiments, one or more computing devices in the computing device cluster may be connected through a network. The network may be a wide area network, a local area network, or the like. FIG. 17 is a diagram of a connection manner of the computing device cluster according to an embodiment of this application. As shown in FIG. 17, two computing devices 1500 are connected through a network. Specifically, the computing devices are connected to the network through communication interfaces in the computing devices. In this type of possible implementation, in a connection manner between computing device clusters shown in FIG. 17, considering that the video stream display method provided in this application includes a large amount of data processing, functions of the obtaining module 1303 are performed by one computing device, and functions of the display module 1302 are performed by the other computing device.

It should be understood that functions of the computing device 1500 shown in FIG. 17 may alternatively be implemented by multiple computing devices 1500.

An embodiment of this application further provides a computer program product including instructions. The computer program product may be software or a program product that includes instructions and that can run on a computing device or be stored in any usable medium. When the computer program product is run on at least one computing device, the at least one computing device is enabled to perform the video stream display method.

Embodiments of this application further provide a computer-readable storage medium. The computer-readable storage medium may be any usable medium that can be stored in a computing device, or a data storage device such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions that instruct the computing device to perform the video stream display method.

The terms such as "first" and "second" in this application are used to distinguish between same or similar items with basically same roles and functions. It should be understood that there is no logical or time-sequence dependency between "first", "second", and "n^{th}", and neither a quantity nor an execution sequence is limited. It should also be understood that although terms such as "first" and "second" are used in the following descriptions to describe various elements, these elements should not be limited by the terms. The terms are simply used for distinguishing one element from another. For example, without departing from the scope of the various examples, a first device may be referred to as a second device, and similarly, a second device may be referred to as a first device. Both the first device and the second device may be devices, and in some cases may be separate and different devices.

The term "at least one" in this application means one or more, and the term "multiple" in this application means two or more. For example, multiple phrases are two or more phrases.

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

All or some of the foregoing embodiments may be implemented by using software, hardware, firmware, or any combination thereof. When software is used to implement embodiments, the foregoing embodiments may be implemented completely or partially in a form of program structure information. The program structure information includes one or more program instructions. When the program instructions are loaded and executed on a computing device, the procedures or functions according to embodiments of this application are completely or partially generated.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

Finally, it should be noted that the foregoing embodiments are merely intended for describing the technical solutions of this application, but not for limiting this application. Although this application is described in detail with reference to the foregoing embodiments, a person of ordinary skill in the art should understand that modifications can still be made to the technical solutions described in the foregoing embodiments or equivalent replacements can be made to some technical features thereof, without departing from the protection scope of the technical solutions in embodiments of this application.

## Claims

1. A video stream display method, comprising:
receiving, by a first device, a video stream of a video conference sent by a second device;
displaying, by the first device, the video stream on a first interface of the video conference; and
obtaining, by the first device, a to-be-played back video frame corresponding to the video stream, and displaying the to-be-played-back video frame on a second interface of the video conference, wherein the to-be-played-back video frame is a video frame with a playback probability greater than a probability threshold in the video stream.

2. The method according to claim 1, wherein obtaining, by the first device, the to-be-played-back video frame corresponding to the video stream comprises:
when a current frame of the video stream is displayed on the first interface, determining, by the first device based on a control operation, that the current frame of the video stream is the to-be-played-back video frame, wherein the control operation comprises a mouse button operation, a keyboard operation, a touch-and-slide operation, or a touch-and-press operation.

3. The method according to claim 1, wherein obtaining, by the first device, the to-be-played-back video frame corresponding to the video stream comprises:
when a current frame of the video stream comprises a preset identifier, determining, by the first device, that the current frame is the to-be-played-back video frame, wherein the preset identifier is added to the current frame by the second device.

4. The method according to claim 1, wherein obtaining, by the first device, the to-be-played-back video frame corresponding to the video stream comprises:
sending, by the first device, a video frame obtaining instruction to the second device; and
receiving, by the first device, the to-be-played-back video frame returned by the second device according to the video frame obtaining instruction.

5. The method according to any one of claims 1 to 4, wherein after obtaining, by the first device, the to-be-played-back video frame corresponding to the video stream, the method further comprises:
saving, by the first device, the to-be-played-back video frame in an image queue, wherein the image queue comprises multiple to-be-played-back video frames; and
displaying the to-be-played-back video frame on the second interface of the video conference comprises:
displaying the to-be-played-back video frame in the image queue on the second interface of the video conference.

6. The method according to claim 5, wherein before displaying the to-be-played-back video frame in the image queue on the second interface of the video conference, the method further comprises:
performing an editing operation on the to-be-played-back video frame in the image queue, wherein the editing operation comprises at least one of modification, deletion, mark addition, or search.

7. The method according to any one of claims 1 to 6, wherein the to-be-played-back video frame is an encrypted video frame.

8. The method according to any one of claims 1 to 7, wherein before displaying the to-be-played-back video frame on the second interface of the video conference, the method further comprises:
receiving display authorization sent by the second device, wherein the display authorization is used by the first device to display the to-be-played-back video frame on the second interface.

9. The method according to claim 8, wherein before receiving the display authorization sent by the second device, the method further comprises:
sending an authorization request to the second device, wherein the authorization request is used by the second device to return the display authorization.

10. The method according to any one of claims 1 to 9, wherein the first interface and the second interface are the same or different.

11. A video stream display method, comprising:
sending, by a second device, a video stream of a video conference to a first device, wherein the video stream is used by the first device to display the video stream on a first interface of the video conference, obtain a to-be-played-back video frame corresponding to the video stream, and display the to-be-played-back video frame on a second interface of the video conference, and the to-be-played-back video frame is a video frame with a playback probability greater than a probability threshold in the video stream.

12. The method according to claim 11, wherein the to-be-played-back video frame corresponding to the video stream comprises a preset identifier, and the preset identifier is used by the first device to obtain, based on the preset identifier, the to-be-played-back video frame corresponding to the video stream; and the method further comprises:
if image content of a current frame of the video stream appears for a first time in the video stream, adding, by the second device, the preset identifier to the current frame as the to-be-played-back video frame.

13. The method according to claim 11, wherein the method further comprises:
if image content of a current frame of the video stream appears for a first time in the video stream, saving, by the second device, the current frame as the to-be-played-back video frame; and
when a video frame obtaining instruction sent by the first device is received, returning, by the second device, the to-be-played-back video frame to the first device.

14. The method according to claim 13, wherein saving, by the second device, the current frame as the to-be-played-back video frame comprises:
saving, by the second device, the current frame as the to-be-played-back video frame in an image queue, wherein the image queue comprises multiple to-be-played-back video frames; and
the method further comprises:
when an editing instruction sent by the first device is received, performing an editing operation on the to-be-played-back video frame in the image queue according to the editing instruction, wherein the editing operation comprises at least one of modification, deletion, mark addition, or search.

15. The method according to any one of claims 12 to 14, wherein the method further comprises:
determining, based on the current frame of the video stream being a video frame with a corresponding encoding bandwidth changed in the video stream, that the image content of the current frame appears for the first time in the video stream; or
determining, based on a similarity between the current frame of the video stream and a historical frame of the video stream being less than a similarity threshold, that the image content of the current frame appears for the first time in the video stream, wherein the historical frame is a video frame before the current frame and with a distance less than a distance threshold from the current frame in the video stream.

16. The method according to any one of claims 11 to 15, wherein the to-be-played-back video frame is an encrypted video frame.

17. The method according to any one of claims 11 to 16, wherein the method further comprises:
sending, by the second device, display authorization to the first device, wherein the display authorization is used by the first device to display the to-be-played-back video frame on the second interface.

18. The method according to claim 17, wherein sending, by the second device, the display authorization to the first device comprises:
receiving, by the second device, an authorization request sent by the first device, and sending the display authorization to the first device based on the authorization request.

19. The method according to any one of claims 11 to 18, wherein the first interface and the second interface are the same or different.

20. A video stream display apparatus, wherein the apparatus is used in a first device, and the apparatus comprises:
a receiving module, configured to receive a video stream of a video conference sent by a second device;
a display module, configured to display the video stream on a first interface of the video conference; and
an obtaining module, configured to obtain a to-be-played-back video frame corresponding to the video stream, wherein the to-be-played-back video frame is a video frame with a playback probability greater than a probability threshold in the video stream; and
the display module is further configured to display the to-be-played-back video frame on a second interface of the video conference.

21. The apparatus according to claim 20, wherein the obtaining module is configured to: when a current frame of the video stream is displayed on the first interface, determine, based on a control operation, that the current frame of the video stream is the to-be-played-back video frame, wherein the control operation comprises a mouse button operation, a keyboard operation, a touch-and-slide operation, or a touch-and-press operation.

22. The apparatus according to claim 20, wherein the obtaining module is configured to: if a current frame of the video stream comprises a preset identifier, determine that the current frame is the to-be-played-back video frame, wherein the preset identifier is added to the current frame by the second device.

23. The apparatus according to claim 20, wherein the obtaining module is configured to: send a video frame obtaining instruction to the second device; and receive the to-be-played-back video frame returned by the second device according to the video frame obtaining instruction.

24. The apparatus according to any one of claims 20 to 23, wherein the apparatus further comprises:
a saving module, configured to save the to-be-played-back video frame in an image queue, wherein the image queue comprises multiple to-be-played-back video frames; and
the display module is configured to display the to-be-played-back video frame in the image queue on the second interface of the video conference.

25. The apparatus according to claim 24, wherein the apparatus further comprises:
an editing module, configured to perform an editing operation on the to-be-played-back video frame in the image queue, wherein the editing operation comprises at least one of modification, deletion, mark addition, or search.

26. The apparatus according to any one of claims 20 to 25, wherein the to-be-played-back video frame is an encrypted video frame.

27. The apparatus according to any one of claims 20 to 26, wherein the receiving module is further configured to receive display authorization sent by the second device, wherein the display authorization is used by the first device to display the to-be-played-back video frame on the second interface.

28. The apparatus according to claim 27, wherein the apparatus further comprises:
a sending module, configured to send an authorization request to the second device, wherein the authorization request is used by the second device to return the display authorization.

29. The apparatus according to any one of claims 20 to 28, wherein the first interface and the second interface are the same or different.

30. A video stream display apparatus, wherein the apparatus is used in a second device, and the apparatus comprises:
a sending module, configured to send a video stream of a video conference to a first device, wherein the video stream is used by the first device to display the video stream on a first interface of the video conference, obtain a to-be-played-back video frame corresponding to the video stream, and display the to-be-played-back video frame on a second interface of the video conference, and the to-be-played-back video frame is a video frame with a playback probability greater than a probability threshold in the video stream.

31. The apparatus according to claim 30, wherein the to-be-played-back video frame corresponding to the video stream comprises a preset identifier, and the preset identifier is used by the first device to obtain, based on the preset identifier, the to-be-played-back video frame corresponding to the video stream; and the apparatus further comprises:
an adding module, configured to: if image content of a current frame of the video stream appears for a first time in the video stream, add the preset identifier to the current frame as the to-be-played-back video frame.

32. The apparatus according to claim 30, wherein the apparatus further comprises:
a saving module, configured to: if image content of a current frame of the video stream appears for a first time in the video stream, save the current frame as the to-be-played-back video frame; and
the sending module is further configured to: when a video frame obtaining instruction sent by the first device is received, return the to-be-played-back video frame to the first device.

33. The apparatus according to claim 32, wherein the saving module is configured to save the current frame as the to-be-played-back video frame in an image queue, wherein the image queue comprises multiple to-be-played-back video frames; and
the apparatus further comprises:
an editing module, configured to: when an editing instruction sent by the first device is received, perform an editing operation on the to-be-played-back video frame in the image queue according to the editing instruction, wherein the editing operation comprises at least one of modification, deletion, mark addition, or search.

34. The apparatus according to any one of claims 31 to 33, wherein the apparatus further comprises:
a determining module, configured to determine, based on the current frame of the video stream being a video frame with a corresponding encoding bandwidth changed in the video stream, that the image content of the current frame appears for the first time in the video stream; or
configured to determine, based on a similarity between the current frame of the video stream and a historical frame of the video stream being less than a similarity threshold, that the image content of the current frame appears for the first time in the video stream, wherein the historical frame is a video frame before the current frame and with a distance less than a distance threshold from the current frame in the video stream.

35. The apparatus according to any one of claims 30 to 34, wherein the to-be-played-back video frame is an encrypted video frame.

36. The apparatus according to any one of claims 30 to 35, wherein the sending module is further configured to send display authorization to the first device, wherein the display authorization is used by the first device to display the to-be-played-back video frame on the second interface.

37. The apparatus according to claim 36, wherein the apparatus further comprises:
a receiving module, configured to receive an authorization request sent by the first device; and
the sending module is further configured to send the display authorization to the first device based on the authorization request.

38. The apparatus according to any one of claims 30 to 37, wherein the first interface and the second interface are the same or different.

39. A computing device cluster, comprising at least one computing device, wherein each computing device comprises a processor and a memory, and the processor of the at least one computing device is configured to execute instructions stored in the memory of the at least one computing device, so that the computing device cluster performs the video stream display method according to any one of claims 1 to 10, or the computing device cluster performs the video stream display method according to any one of claims 11 to 19.

40. A video stream display system, comprising a first device and a second device, wherein the first device is configured to implement the video stream display method according to any one of claims 1 to 10, and the second device is configured to implement the video stream display method according to any one of claims 11 to 19.

41. A computer-readable storage medium, comprising computer program instructions, wherein when the computer program instructions are executed by a computing device cluster, the computing device cluster performs the video stream display method according to any one of claims 1 to 19.

42. A computer program product comprising instructions, wherein when the instructions are run by a computing device cluster, the computing device cluster is caused to perform the video stream display method according to any one of claims 1 to 19.
